# EUROPÄISCHE PATENTSCHRIFT

(11) **EP 1 994 815 B1**
(45) Veröffentlichungstag und Bekanntmachung des Hinweises auf die Patenterteilung: **12.09.2012**
(21) Anmeldenummer: 08009041.8
(22) Anmeldetag: 15.05.2008
(51) Int. Cl.: A01C 15/04, A01C 7/08

(54) **Verteilerkopf für eine Sä- oder Düngemaschine**
Distribution head for a sowing or fertilizing machine
Tête de répartiteur pour une machine à semence ou à engrais

(30) Priorität: 25.05.2007 DE 102007024464
(43) Veröffentlichungstag der Anmeldung: 26.11.2008
(60) Teilanmeldung: 12005241.0
(73) Patentinhaber: Alois Pöttinger Maschinenfabrik GmbH, 4710 Grieskirchen (AT)
(72) Erfinder: Preimess, Hans-Jörg, Dipl.-Ing., 9811 Lendorf 15 (AT); Grundner, Stefan, 4621 Sipbachzell 147 (AT)
(74) Vertreter: Thoma, Michael

(56) Entgegenhaltungen:
- WO-A-97/21338
- DE-C1- 3 805 148
- DE-C1- 4 411 240
- DE-T5-112004 001 272

## Beschreibung

Die vorliegende Erfindung betrifft einen Verteilerkopf für eine Landmaschine, insbesondere Sä- und/oder Düngemaschine, zur pneumatischen Verteilung von Saatgut, Dünger oder dergleichen, mit einer Vielzahl von Auslässen, die vom Verteilerkopf weg zu Ausbringelementen führen, sowie zumindest einem Blockierelement zum Blockieren zumindest eines der Auslässe, wobei das zumindest eine Blockierelement zumindest einen Luftdurchlass aufweist, der den Austritt von Luft in den blockierten Auslass erlaubt, jedoch den Austritt von Saatgut oder Dünger in den blockierten Auslass verhindert.

Bei pneumatisch arbeitenden Sämaschinen werden üblicherweise mit Hilfe eines Luftstroms Saatgut, Dünger oder ähnliche körnige Stoffe aus einem Saatgutbehälter durch ein Rohr zu einem Verteilerkopf geführt, in dem das Saatgut bzw. der Dünger oder dergleichen auf eine Mehrzahl von Auslässen verteilt wird, die über Rohre, Schläuche oder dergleichen mit entsprechenden Ausbringelementen verbunden sind, die in Reihe nebeneinander bzw. versetzt hintereinander angeordnet sind. Über diese Ausbringelemente wird das auszubringende Gut in mehreren Reihen nebeneinander auf dem bzw. in dem Boden abgelegt. Der Verteilerkopf sorgt hierbei dafür, dass das Saatgut zumindest näherungsweise gleichmäßig auf die im Verteilerkopf angeordneten Auslässe und die damit verbundenen Ausbringelemente verteilt wird. Üblicherweise umfasst der Verteilerkopf hierzu einen zumindest näherungsweise rotationssymmetrischen, grob gesprochen pilzkopfförmigen Verteilerraum, dem durch ein zentrales Zuführrohr das Saatgut über einen Luftstrom eingeblasen wird, so dass sich das Saatgut in dem Verteilerraum auf die außenliegend angeordneten Auslässe verteilt.

Bei bestimmten Getreidesorten, beispielsweise bei Weizen, hat das Saatgut eine kleine Kornabmessung und kann in relativ engen Reihen und mit kleinen Abständen zwischen den Saatgutkörnern in der jeweiligen Reihe gesät werden. Bei anderen Sorten hingegen, beispielsweise bei Mais, mit einer größeren Kornabmessung wird normalerweise ein größerer Abstand zwischen den Reihen und auch zwischen den Körnern benötigt. Es ist daher üblich, verschiedene Sämaschinen für diese verschiedenen Getreidesorten zu verwenden.

Allerdings ist es auch bereits bekannt geworden, dieselbe Sämaschine für das Ausbringen verschiedener Getreidesorten zu verwenden. Um hier den Reihenabstand für das abgelegte Gut verändern zu können, wurde vorgeschlagen, in dem Verteilerkopf Blockierelemente einzusetzen, die beispielsweise jeden zweiten Auslass blockieren, so dass das Saatgut nur in jeden wiederum zweiten Auslass eintreten kann und über eine entsprechend verringerte Anzahl von Ausbringelementen ausgebracht wird. Beispielsweise schlägt die DE 10 2005 008 290 A1 vor, Blockierelemente mit einem keilförmigen Kopf in einzelne Auslässe des Verteilerkopfes einzustecken. Aus der DE 10 2005 038 216 A1 ist es bekannt, einzelne Auslässe eines solchen pneumatisch arbeitenden Verteilerkopfes mittels Schieber absperren zu können. Durch das Blockieren einzelner Auslässe ergeben sich jedoch Probleme hinsichtlich der Luftführung. Durch das Abdecken einzelner Auslässe kann in den nicht abgedeckten Auslässen eine zu hohe Strömungsgeschwindigkeit hervorgerufen werden, was zwar durch ein Verringern des Luftstroms insgesamt kompensiert werden könnte, was jedoch wiederum dazu führen kann, dass der Luftstrom im Zuführrohr nicht mehr ausreichend stark ist, um die Saatgutkörner mitzunehmen.

Zum anderen kann es ggf. auch zu einem sogenannten "Kaffeemühleneffekt" kommen, wonach die Saatgutkörner durch Abprallen an den Blockierelementen beginnen, kreisbahnförmig in dem Verteilerkopf umhergewirbelt zu werden, anstatt in einen der noch offen gebliebenen Auslässe einzutreten.

Aus der DE 11 2004 001 272 T5 ist es bekannt, als Blockierelemente bauchig gewölbte Prallbleche zu verwenden, die in dem Verteilerkopf jeweils mehrere der Auslässe abdecken und Luftaustrittsöffnungen in Form von Bohrungen bzw. Löchern aufweisen, deren Größe derart bemessen ist, dass einerseits die Saatgutkörner zurückgehalten werden, Luft jedoch durch die Blockierelemente hindurchtreten und somit über die blockieren Auslässe abgeblasen werden kann. Dies verringert die vorgenannte Problematik zu hoher Luftgeschwindigkeiten in den nicht blockierten Auslässen. Allerdings bleibt die Problematik des genannten "Kaffeemühleneffekts" ungelöst. Zudem bergen die Luftdurchtrittsbohrungen die Gefahr, dass sie von Saatgutkörnern im Laufe des Betriebs zugesetzt werden, wenn sie zu klein bemessen sind. Bei größerer Bemessung hingegen besteht die Gefahr, dass das Saatgut nicht zuverlässig genug zurückgehalten wird, d.h. Saatgutkörner doch in die an sich blockierten Auslässe geraten können. Insbesondere passen die vorgesehenen Luftaustrittsöffnungen nicht für Körner verschiedener Größe. Auch ist die Querverteilung beim Steckenbleiben von Körnern fragwürdig.

Hiervon ausgehend liegt der vorliegenden Erfindung die Aufgabe zugrunde, einen verbesserten Verteilerkopf der genannten Art zu schaffen, der Nachteile des Standes der Technik vermeidet und letzteren in vorteilhafter Weise weiterbildet. Vorzugsweise soll eine bessere Steuerung des Luftstroms bei zuverlässigem Blockieren der jeweiligen Auslässe für Saatgutkörner erreicht werden, ohne ein Zusetzen der Luftdurchlässe in den Blockierelementen befürchten zu müssen.

Erfindungsgemäß wird diese Aufgabe durch einen Verteilerkopf gemäß Anspruch 1 gelöst. Bevorzugte Ausgestaltungen der Erfindung sind Gegenstand der abhängigen Ansprüche.

Es wird also vorgeschlagen, den Luftaustritt durch die an sich blockierten Auslässe hindurch nicht mehr starr vorzugeben, sondern variabel zu steuern. Hierdurch kann unabhängig von der Anzahl der blockierten Auslässe der Rückstaudruck im Verteilerkopf eingestellt und die in den nicht blockierten Auslässen eintretende Luftmenge und Luftströmungsgeschwindigkeit variabel gesteuert werden. Erfindungsgemäß ist das zumindest eine Blockierelement hinsichtlich der Größe seines Luftdurchlasses einstellbar ausgebildet. Durch Veränderung des Durchtrittsquerschnitts bzw. der Durchtrittsquerschnittsfläche kann feinfühlig eingestellt werden, wie viel Luft durch die Blockierelemente hindurch in die an sich für das Saatgut blockierten Auslässe gelangt und wie viel Luft über die nicht blockierten Auslässe abgeleitet wird. Beispielsweise kann hierdurch bei großkörnigem Saatgut, für das ein großer Luftstrom erforderlich ist, der Luftdurchlass durch die Blockierelemente hindurch vergrößert werden, um keinen zu großen Rückstaudruck im Verteilerkopf zu erreichen. Wird andererseits kleines Saatgut ausgebracht, für das ein kleinerer Luftstrom erforderlich ist, kann der Luftaustritt durch die Blockierelemente verkleinert werden, um den gewünschten Rückstaudruck zu erhalten.

Die gewünschte Veränderbarkeit des Luftaustritts durch das jeweilige Blockierelement hindurch kann grundsätzlich auf verschiedene Art und Weise erreicht werden. Beispielsweise könnten in einem Blockierelement jeweils mehrere Luftaustrittsöffnungen angeordnet sein, von denen zumindest eine oder mehrere verschließbar ist bzw. sind, so dass je nach Anzahl der geöffneten Luftaustrittsöffnungen unterschiedliche Luftmengen austreten können. In bevorzugter Weiterbildung der Erfindung jedoch ist der zumindest eine Luftdurchlass in dem zumindest einen Blockierelement in Form eines Spalts ausgebildet, der hinsichtlich seiner Spaltbreite veränderbar ist.

Vorteilhafterweise ist der zumindest eine Luftdurchlass nicht im zentralen Stirnabschnitt des jeweiligen Blockierelements, sondern in einer seitlichen Ableitflanke des Blockierelements vorgesehen, die von der Spitze bzw. dem vorspringenden Kopfabschnitt des Blockierelements zu einem benachbarten, nicht versperrten Auslass führt, wobei die Luftaustrittsöffnung grob gesprochen etwa mittig in der genannten Ableitflanke oder vorzugsweise sogar näher zu der nicht blockierten Auslassöffnung hin als zu der Spitze des Blockierelements hin angeordnet ist. Die genannte Ableitflanke erstreckt sich dabei vorteilhafterweise zur Einlassströmungsrichtung des benachbarten, nicht blockierten Auslasses spitzwinklig geneigt. Die Ableitflanke bildet dabei einen Abschnitt des Blockierelements, der den blockierten Auslass abdeckt und entlang dessen das Saatgut zu dem benachbarten, nicht blockierten Auslass hingeleitet wird.

In vorteilhafter Weiterbildung der Erfindung kann die genannte Ableitflanke, in der der Luftdurchlass ausgebildet ist, zwei Flankenabschnitte aufweisen, die überlappend angeordnet sind, so dass zwischen ihnen ein Spalt gebildet ist. Dabei ist zumindest einer der genannten Flankenabschnitte bewegbar gelagert, vorzugsweise versetzbar, so dass die Spaltbreite zwischen den beiden Flankenabschnitten verändert werden kann.

Insbesondere ist der Luftdurchlass in dem Blockierelement derart ausgebildet, dass sich die Durchtrittsrichtung durch den genannten Luftdurchlass gegenläufig zur vorzugsweise radialen Verteil- bzw. Austrittsrichtung erstreckt, in der das Saatgut oder der Dünger verteilt bzw. in den benachbarten, nicht blockierten Auslass geführt wird. Hierdurch wird eine Verstopfung des Luftdurchlasses durch das Saatgut bzw. Düngerkörner vermieden, da das Saatgut durch seine Massenträgheit an dem Luftdurchlass vorbei geleitet wird. Das träge Saatgut wird nicht in die gegenläufige Durchtrittsrichtung umgelenkt, sondern fliegt sozusagen seinen Weg einigermaßen geradeaus weiter, der das Saatgut in die jeweils nicht blockierte Auslassöffnung führt. Die Luft hingegen wird sozusagen aufgrund ihrer fehlenden bzw. äußerst geringen Trägheit leicht umgelenkt bzw. sorgt der räumlich werdende Luftdruck dafür, dass die Luft durch die gegenläufigen Luftdurchlässe austreten kann.

Hinsichtlich der Formgebung des Blockierelements bestehen grundsätzlich verschiedene Möglichkeiten. Nach einer bevorzugten Ausführung der Erfindung kann das Blockierelement ein Keilelement bilden, das im wesentlichen aus zwei zueinander geneigten Ableitflanken besteht. Hierbei umfasst das Keilelement vorteilhafterweise zumindest zwei zueinander bewegbare Keilabschnitte, die es erlauben, die Breite eines zwischen ihnen vorgesehenen Spalts, der den vorgenannten Luftdurchlass bildet, zu variieren.

In Weiterbildung der Erfindung bildet hierbei der eine Keilabschnitt eine Keilspitze, die mit ihren seitlichen zwei Ableitflanken die Ableitflanken des anderen Keilabschnitts überlappt. Um den im Überlappungsbereich vorgesehenen Luftdurchlassspalt hinsichtlich seiner Querschnittsfläche variieren zu können, kann vorgesehen sein, die Ableitflanken der Keilspitze oder des anderen Keilabschnitts hinsichtlich ihres Keilwinkels variabel auszubilden. Vorzugsweise jedoch besitzen sowohl die Keilspitze als auch der andere, daran anschließende Keilabschnitt feste Keilwinkel bezüglich ihrer Ableitflanken. Die Größe des Luftdurchtrittsspaltes kann vorteilhafterweise dadurch variiert werden, dass die beiden Keilabschnitte in Richtung der Längsmittelebene zueinander verstellt werden können. Vorteilhafterweise ist es hierbei die Keilspitze, die axial versetzt werden kann, um den Luftdurchtrittsspalt hinsichtlich seiner Größe zu verändern. Eine feststehende Anordnung des an die Keilspitze anschließenden anderen Keilabschnitts besitzt den Vorteil, dass dessen Anschluss an die Verteilerkopfwandung, in der die Auslässe vorgesehen sind, gleichbleibend, insbesondere im wesentlichen spaltfrei ausgebildet sein kann.

Durch die keilförmige Ausbildung der Blockierelemente kann vorteilhafterweise dem eingangs genannten, unerwünschten Kaffeemühleneffekt entgegengewirkt werden, wonach die Saatgut- bzw. Düngemittelkörner bei nicht ganz optimalen Luftstromverhältnissen dazu neigen, kreisförmig in der Verteilerkammer des Verteilerkopfes umherzuzirkulieren. Beim Aufprall auf die vorzugsweise spitzwinklig geneigten Ableitflanken der keilförmigen Blockierelemente wird den Saatgutkörnern eine entsprechende Geschwindigkeitskomponente in Umfangsrichtung genommen, so dass sie von dem in die nicht blockierten Auslassöffnungen eintretenden Luftstrom mitgenommen werden. Die Blockierelemente brauchen hierzu keine mathematisch ideale Keilform mit geraden, ebenen Flanken und einer scharfkantigen Spitze aufweisen. Gegebenenfalls können auch leicht gewölbte Ableitflanken Verwendung finden oder die Spitze der Keilform leicht abgerundet sein.

Die Keilform des Blockierelements ist vorteilhafterweise insgesamt betrachtet spitzwinklig ausgebildet, wobei der Keilwinkel zwischen den beiden Ableitflanken im Bereich von 45° bis 90° liegen kann und nach einer vorteilhaften Ausführung etwa 50° bis 80° betragen kann.

Hinsichtlich ihrer Größe und Anzahl können die Blockierelemente ebenfalls verschieden ausgebildet sein. Typischerweise werden mehrere Blockierelemente vorzugsweise symmetrisch bzw. mit gleichbleibendem Teilungswinkel in dem Verteilerraum des Verteilerkopfes verteilt vorgesehen, wobei die Blockierelemente jeweils zumindest einen Auslass abdecken. In Weiterbildung der Erfindung können die Blockierelemente auch mehr als einen, vorzugsweise zwei Auslässe abdecken, so dass jeder dritte Auslass offen bleibt, wenn nach einem offenen Auslass gleich wieder ein Blockierelement angebracht wird.

Da mit zunehmender Anzahl von Blockierelementen der Teilungswinkel zwischen den nicht blockierten Auslässen größer wird, führen Saatgutanhäufungen in einem bestimmten Winkelsektor des Verteilerkopfes zu einer verstärkt ungleichmäßigen Saatgutausbringung über den in diesem Bereich noch offenen Auslass, so dass eine gleichmäßige Saatgutverteilung in dem Verteilerraum des Verteilerkopfes besonders wichtig ist. Um die Luftströmung in dem Verteilerkopf feinfühlig einstellen zu können bzw. Saatgutanhäufungen in einem bestimmten Winkelsektor ausgleichen bzw. unterbinden zu können, ist nach einem weiteren Aspekt der Erfindung vorgesehen, dass der den Verteilerraum des Verteilerkopfes begrenzende Verteilerkorpus gegenüber einem vorzugsweise zentral angeordneten, von unten her in den Verteilerraum führenden Zuführrohr in seiner Winkellage gegenüber dem genannten Zuführrohr veränderbar und einstellbar ist, wobei die Winkeleinstellvorrichtung vorteilhafterweise dreidimensional arbeitend ausgebildet ist, so dass die Winkellage in alle Richtungen gegenüber dem Zuführrohr verändert werden kann. Durch eine solche Winkeleinstellbarkeit lässt sich die Saatgut- bzw. Düngerverteilung unabhängig von den genannten Blockierelementen beträchtlich verbessern. Die Winkeleinstellvorrichtung umfasst in Weiterbildung der Erfindung mehr als zwei, insbesondere genau drei über den Umfang verteilt angeordnete Einstellelemente, die einen radial vom Zuführrohr beabstandeten Verteilerkorpusabschnitt mit dem Zuführrohr verbinden. Insbesondere kann eine Dreipunktabstützung vorgesehen sein, die längenveränderbare Stützstreben aufweist, die einen äußeren Randabschnitt des insgesamt pilzkopfförmigen Verteilerkorpus am Zuführrohr abstützen. Um die Winkelbewegung des Verteilerkorpus gegenüber dem Zuführrohr zu ermöglichen, ist der Anschluss des Zuführrohrs an dem Verteilerkorpus nachgiebig ausgebildet, beispielsweise durch entsprechend dünne Ausbildung der Anschlussstutzenwandung.

Die Erfindung wird nachfolgend anhand einer bevorzugten Ausführungsform und zugehöriger Zeichnungen näher erläutert. In den Zeichnungen zeigen:
- Fig. 1:: einen Längsschnitt durch den Verteilerkopf einer Sämaschine nach einer bevorzugten Ausführung der Erfindung,
- Fig. 2:: eine perspektivische Draufsicht auf den Verteilerkopf aus Fig. 1, wobei dessen Decke abgenommen ist, um das Innere der Verteilerkammer und die darin angeordneten Blockierelemente zu zeigen,
- Fig. 3:: eine vergrößerte, ausschnittsweise perspektivische Darstellung eines Blockierelements des Verteilerkopfes, das in Fig. 2 als strichliert umrandetes Detail B gekennzeichnet ist, und
- Fig. 4:: eine Draufsicht auf den Verteilerkopf aus Fig. 2.

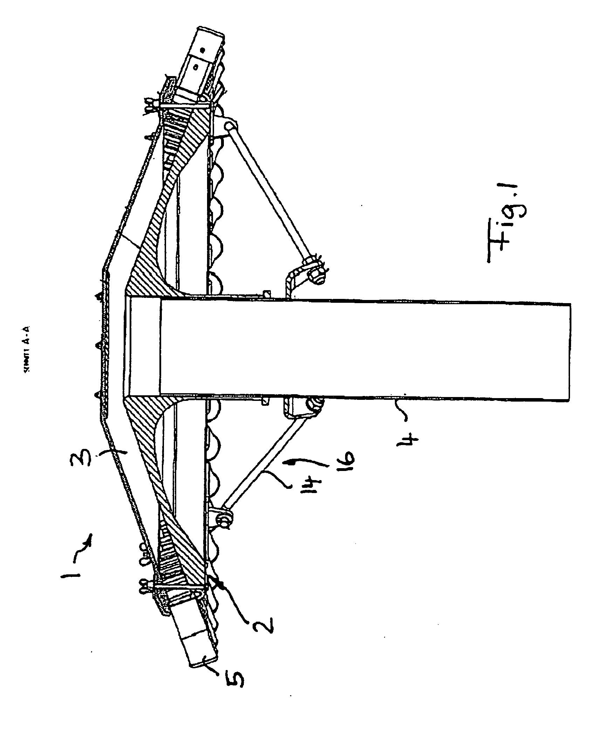

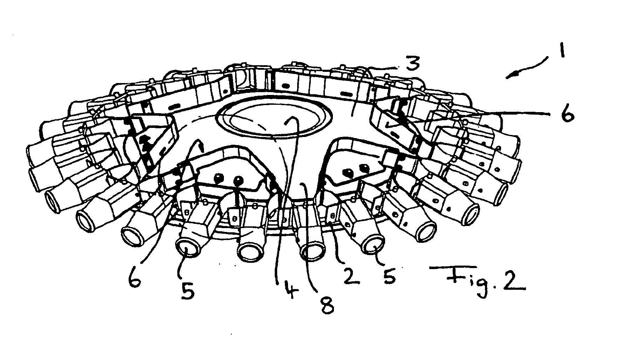

Der in den Figuren gezeichnete Verteilerkopf 1 ist für eine pneumatische Sämaschine bestimmt, die im Übrigen nicht weiter gezeigt ist. Der Verteilerkopf umfasst einen insgesamt - grob gesprochen - pilzförmigen Verteilerkorpus 2, der in seinem Inneren eine runde, leicht tellerförmig gewölbte Verteilerkammer 3 begrenzt, vgl. Figuren 1 und 2. Ein Zuführrohr 4 in Form eines senkrecht angeordneten Steigrohres mündet zentral, mittig von unten her in die genannte Verteilerkammer 3, so dass durch einen entsprechenden Luftstrom über das genannte Zuführrohr 4 Saatgut, Dünger oder ähnliche körnige Stoffe in die Verteilerkammer 3 eingeblasen werden können. In der Verteilerkammer prallen die Saatgutkörner zunächst gegen die der Mündung des Zuführrohrs 4 gegenüber angeordnete Deckenwandung, von wo aus sie sich radial nach außen verteilen.

Am radialen äußeren Abschnitt des Verteilerkorpus 2 sind eine Vielzahl von radial angeordneten Auslässen 5 über den Umfang verteilt, die mit nicht näher gezeigten Saatgutrohren bzw. -schläuchen verbunden sind, mittels derer sie mit Ausbringelementen der Sämaschine kommunizieren, so dass Saatgutkörner, die über die Auslässe 5 aus dem Verteilerkopf 1 austreten, zu den entsprechenden Ausbringelementen der Sämaschine geleitet werden.

Wie Figur 2 zeigt, sind in der Verteilerkammer 3 in Form von herausnehmbaren und einsetzbaren Einsätzen ausgebildete Blockierelemente 6 vorgesehen, die einen Teil der am Umfang angeordneten Auslässe 5 abdecken und hinsichtlich des Saatgut- bzw. Düngerdurchgangs blockieren.

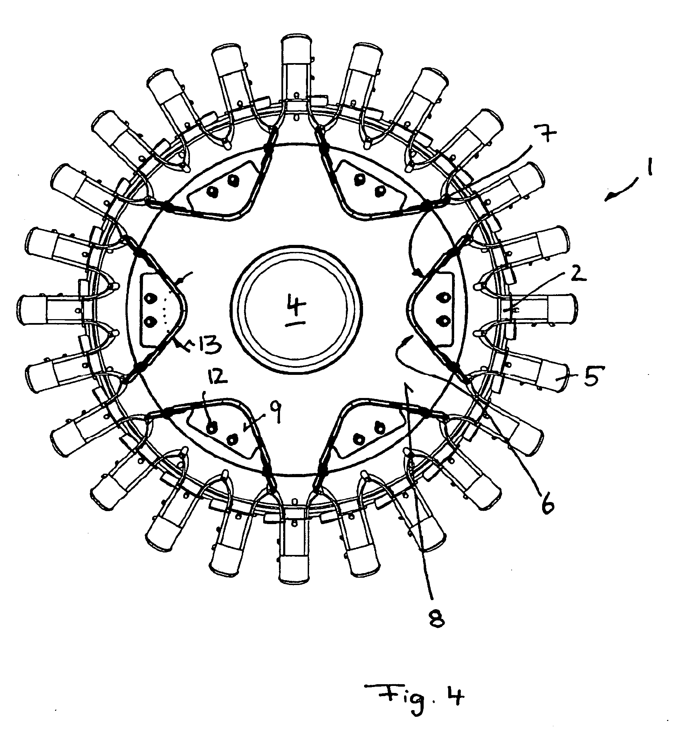

Wie am besten Figur 4 zeigt, sind die Blockierelemente 6 in der gezeichneten Ausführungsform in Form von Keilelementen ausgebildet, die jeweils zwei zueinander spitzwinklig geneigte Ableitflanken 7 aufweisen, die sich zwischen dem Boden und der Decke der Verteilerkammer 3 bzw. des Verteilerkorpus 2 erstrecken und gemeinsam, d.h. pro Blockierelement 6 zwei nebeneinander liegende Auslässe 5 abdecken, vgl. Figur 4. Hierdurch ergeben sich zwischen zwei nebeneinander angeordneten Blockierelementen 6 sich nach außen hin zu den Auslässen 5 konisch verjüngende Auslass-Zufuhrkanäle 8, vgl. Figur 4.

In der gezeichneten Ausführungsform sind die zueinander keilförmig angestellten Ableitflanken 7 eines jeden Blockierelements 6 unter einem Keilwinkel von etwa 60° bis 70° zueinander geneigt, wobei die Blockierelemente 6 radial betrachtet sich bis etwa zur Hälfte des ringförmigen Raumes um die Mündung des Zuführrohres 4 herum von den Auslässen 5 her erstrecken, d.h. die Spitzen der keilförmigen Blockierelemente 6 liegen etwa in einem mittleren Ringabschnitt des genannten ringförmigen Raumes zwischen dem Rand des Zuführrohres 4 und den Auslässen 5, vgl. Figur 4. Es versteht sich jedoch, dass diese Anordnung je nach Anzahl der Auslässe 5 und dem Neigungswinkel der Ableitflanken 7 variieren kann.

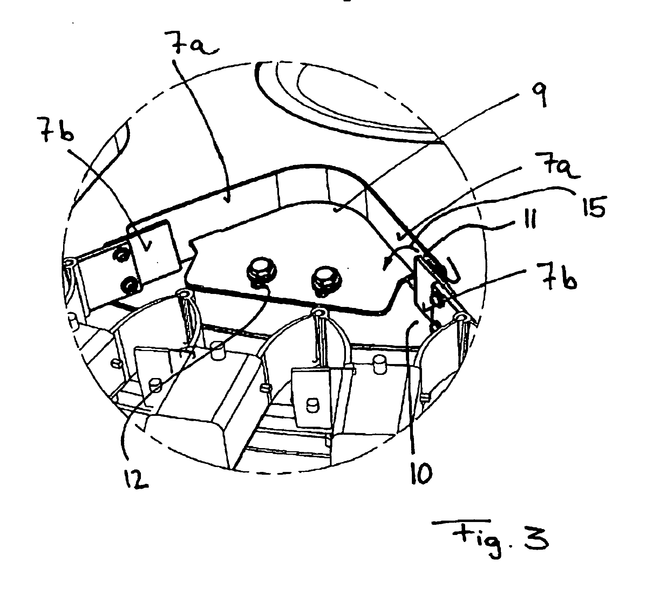

Die Blockierelemente 6 sind dabei, wie Figur 3 zeigt, mehrteilig ausgebildet. In der gezeichneten Ausführung bildet ein erster Blockierelementabschnitt 9 eine Keilspitze, die mit ihren Ableitflanken 7a die entsprechenden Ableitflanken 7b eines zweiten Blockierelementabschnitts 10 überlappt, wobei die Ableitflanken 7b des genannten zweiten Blockierelementsabschnitts 10 ebenfalls keilförmig angestellt sind und zusammen den breiteren, hinteren Endabschnitt des Keilelements bilden.

In dem Überlappungsbereich der Ableitflanken der beiden Blockierelementeabschnitte 9 und 10 ist ein Luftdurchtritt 11 in Form eines Spalts vorgesehen, der zwischen den beiden Ableitflanken 7a und 7b verbleibt.

Die Breite des genannten den Luftdurchtritt 11 bildenden Spalts kann durch Verstellung der beiden Blockierelementeabschnitte 9 und 10 zueinander verändert werden. In der gezeichneten Ausführungsform kann vorteilhafterweise der die Keilspitze bildende erste Blockierelementeabschnitt 9 in Längsrichtung des keilförmigen Blockierelements, d.h. im wesentlichen etwa in radialer Richtung, axial verstellt werden, d.h. der erste Blockierelementeabschnitt 9 kann weiter nach innen bzw. weiter nach außen gesetzt werden. Hierzu ist in der gezeichneten Ausführung eine Langlochführung 12 vorgesehen, mittels derer der erste Blockierelementeabschnitt 9 beispielsweise unter Zuhilfenahme von Schraubbolzen in dem Verteilerkopf 1 befestigt werden kann, wobei vorzugsweise mittels der genannten Schraubbolzen gleichzeitig auch der zweite Blockierelementeabschnitt 10 befestigt werden kann.

Wie Figur 3 zeigt, wird die Spaltbreite zwischen den sich überlappenden Ableitflankenabschnitten 7a und 7b größer, wenn die Keilspitze des Blockierelements 6 weiter nach innen versetzt wird, während sich die Spaltbreite verkleinert, wenn die genannte Keilspitze des Blockierelements 6 weiter nach außen und damit mehr auf den zweiten Blockierelementabschnitt 10 aufgesetzt wird.

Vorteilhafterweise erstreckt sich die Durchtrittsrichtung durch den Luftdurchtrittsspalt 11 gegenläufig zu der Ableitrichtung durch die genannten Auslass-Zuführkanäle 8 hindurch. Durch die Trägheit des auszubringenden Gutes setzen sich hierdurch die entsprechenden Körner nicht auf den Luftdurchtritt 11, so dass dieser sich nicht zusetzen kann.

Hierdurch ergibt sich folgende Funktion: Die über das Zuführrohr 4 in die Verteilerkammer 3 durch den entsprechenden Luftstrom eingebrachten Saatgutkörner verteilen sich in der Verteilerkammer 3 radial nach außen auf die Auslässe 5 zu. Dabei werden sie von den keilförmigen Blockierelementen 6 davor bewahrt, in jede Auslassöffnung zu strömen. Die Ableitflanken 7 der Blockierelemente 6 teilen den Saatgutstrom sozusagen auf die verbleibenden, noch offenen Auslässe 5 auf, über die sie zu den damit verbundenen Ausbringelementen geleitet werden. Die Luft hingegen kann über die Luftdurchtrittsspalte 11 hindurch auch in die hinsichtlich des Saatgutaustrags blockierten Auslässe 5 austreten. Durch Einstellung der Querschnittsfläche der Luftdurchtritte 11 kann hierbei der Rückstaudruck in der Verteilerkammer 3 gesteuert werden, wodurch wiederum die Luftströmungsgeschwindigkeit in den nicht blockierten Auslässen 5 beeinflusst werden kann.

Um Saatgutanhäufungen in einzelnen Winkelsektoren zu vermeiden, kann der Verteilerkorpus 2 gegenüber dem Zuführrohr 4 in alle Richtungen gekippt werden. Wie Figur 1 zeigt, ist der Anschlussstutzen des Verteilerkorpus 2, mit dem der Verteilerkorpus 2 an das Zuführrohr 4 angeschlossen ist, recht dünn ausgebildet, so dass sich durch Verformung des Anschlussstücks der Verteilerkorpus 2 insgesamt gegenüber dem Zuführrohr 4 leicht biegen lässt. Um die Winkelausrichtung fein einstellen zu können, ist eine Dreipunktlagerung des Verteilerkorpus 2 vorgesehen. Drei über den Umfang verteilt angeordnete Abstützelemente 14 in Form von Streben stützen den äußeren Randabschnitt des Verteilerkorpus 2 an dem Zuführrohr 4 ab. Durch Längenänderung der Abstützelemente 14 kann hierbei die Winkelstellung des pilzkopfförmigen Verteilerkorpus 2 gegenüber dem Zuführrohr 4 verändert werden, wobei in der gezeichneten Ausführungsform die Längenänderung der Abstützelemente 14 durch auf die als Gewindestangen ausgebildeten Abstützelemente 14 aufgeschraubte Muttern bewirkt werden kann. Durch die räumliche Dreipunktabstützung können feine Winkelveränderungen bzw. Verkippungen des Verteilerkorpus 2 gegenüber dem Zuführrohr 4 vorgenommen werden.

## Patentansprüche

1. Verteilerkopf für eine Landmaschine, insbesondere Sä- und/oder Düngemaschine, zur pneumatischen Verteilung von Saatgut, Dünger oder dergleichen, mit einer Mehrzahl von Auslässen (5), die vom Verteilerkopf weg zu Ausbringelementen der Landmaschine führen, sowie zumindest einem Blockierelement (6) zum Blockieren zumindest eines der Auslässe (5), wobei das Blockierelement (6) zumindest einen Luftdurchlass (11) aufweist, der den Austritt von Luft in den blockierten Auslass (5) erlaubt, jedoch den Austritt von Saatgut oder Dünger in den genannten blockierten Auslass (5) verhindert, **dadurch gekennzeichnet, dass** das zumindest eine Blockierelement (6) hinsichtlich der Größe seines Luftdurchlasses (11) einstellbar ausgebildet ist.

2. Verteilerkopf nach dem vorhergehenden Anspruch, wobei das zumindest eine Blockierelement (6) zumindest eine seitliche Ableitflanke (7) mit zumindest einem den Luftdurchlass (11) bildenden Spalt aufweist, dessen Spaltbreite veränderbar ausgebildet ist.

3. Verteilerkopf nach dem vorhergehenden Anspruch, wobei die zumindest eine seitliche Ableitflanke (7) zwei Flankenabschnitte (7a, 7b) aufweist, die überlappend angeordnet sind, so dass zwischen ihnen ein Spalt gebildet ist, wobei zumindest einer der Flankenabschnitte (7a, 7b) bewegbar gelagert, vorzugsweise versetzbar angeordnet ist.

4. Verteilerkopf nach einem der vorhergehenden Ansprüche, wobei das zumindest eine Blockierelement (6) ein Keilelement bildet, das zumindest zwei zueinander bewegbare Keilabschnitte (9, 10) aufweist.

5. Verteilerkopf nach dem vorhergehenden Anspruch, wobei einer der Keilabschnitte (9) eine Keilspitze bildet, die mit ihren seitlichen Ableitflanken (7a) die Ableitflanken (7b) des anderen Keilabschnitts (10) überlappt.

6. Verteilerkopf nach dem vorhergehenden Anspruch, wobei die Keilspitze in verschiedene Positionen versetzbar gelagert ist.

7. Verteilerkopf nach einem der vorhergehenden Ansprüche, wobei der Luftdurchlass (11) eine zur Verteil- und/oder Austrittsrichtung, in der das Saatgut oder der Dünger verteilt und/oder in einen zu dem Blockierelement (6) benachbarten unblockierten Auslass (5) geführt wird, gegenläufige Durchtrittsrichtung (15) aufweist.

8. Verteilerkopf nach einem der vorhergehenden Ansprüche, wobei das Blokkierelement (6) mit zwei seitlichen Ableitflanken (7) einen Keilwinkel (13) im Bereich von 30° bis 120°, vorzugsweise 45° bis 90°, insbesondere etwa 50° bis 80°, aufweist.

9. Verteilerkopf nach einem der vorhergehenden Ansprüche, wobei mehrere vorzugsweise symmetrisch verteilte Blockierelemente (6) vorgesehen sind, die jeweils zumindest einen Auslass (5) blockieren.

10. Verteilerkopf nach dem vorhergehenden Anspruch, wobei jedes Blockierelement (6) mehr als einen, vorzugsweise zwei Auslässe (5) blockiert.

11. Verteilerkopf nach einem der vorhergehenden Ansprüche, wobei das Verhältnis von blockierten zu nicht blockierten Auslässen mindestens 1:1, vorzugsweise 2:1 beträgt.

12. Verteilerkopf nach einem der vorhergehenden Ansprüche, wobei das zumindest eine Blockierelement (6) in Form eines herausnehmbaren Einsatzes ausgebildet ist.

13. Verteilerkopf nach einem der vorhergehenden Ansprüche, wobei ein zentraler Stirnabschnitt des zumindest einen Blockierelements (6) frei von Luftdurchlässen ausgebildet ist.

14. Verteilerkopf nach einem der vorhergehenden Ansprüche, wobei ein zentrales Zuführrohr (4) vorgesehen ist, das etwa mittig in eine Verteilerkammer (3) des Verteilerkopfes mündet, die in einem Verteilerkorpus (2) ausgebildet ist, wobei der Verteilerkorpus (2) gegenüber dem Zuführrohr (4) in alle Richtungen verkippbar gelagert ist und eine Einstellvorrichtung zur Einstellung der Winkellage des Verteilerkorpus (2) gegenüber dem Zuführrohr (4) vorgesehen ist.

15. Verteilerkopf nach dem vorhergehenden Anspruch, wobei die Winkeleinstellvorrichtung (16) eine Mehrpunkt-, vorzugsweise Dreipunktabstützung mit längenveränderbaren Abstützelementen (14) äufweist, die den Verteilerkorpus (2) an dem Zuführrohr (4) abstützen.

## Claims

1. A distributor head for an agricultural machine, in particular a sewing machine and/or a fertilising machine, for the pneumatic distribution of seeds, fertiliser or the like, having a plurality of outlets (5) which lead away from the distributor head to output elements of the agricultural machine and having at least one blocking element (6) for blocking at least one of the outlets (5), wherein the blocking element (6) has at least one air passage (11) which allows the discharge of air into the blocked outlet (5), but prevents the discharge of seeds or fertiliser into the named blocked outlet (5), **characterised in that** the at least one blocking element (6) is made adjustable with respect to the size of its air passage (11).

2. A distributor head in accordance with the preceding claim, wherein the at least one blocking element (6) has at least one side deflection flank (7) with at least one gap which forms the air passage (11) and whose gap width is made as adjustable.

3. A distributor head in accordance with the preceding claim, wherein the at least one side deflection flank (7) has two flank sections (7a, 7b) which are arranged overlapping so that a gap is formed between them, with at least one of the flank sections (7a, 7b) being supported movably, preferably being arranged displaceably.

4. A distributor head in accordance with one of the preceding claims, wherein the at least one blocking element (6) forms a wedge element which has at least two wedge sections (9, 10) movable towards one another.

5. A distributor head in accordance with one of the preceding claims, wherein one of the wedge sections (9) forms a wedge tip whose side deflection flanks (7a) overlap the deflection flanks (7b) of the other wedge section (10).

6. A distributor head in accordance with the preceding claim, wherein the wedge tip is supported displaceably in different positions.

7. A distributor head in accordance with one of the preceding claims, wherein the air passage (11) has a passage direction (15) counter to the direction of distribution and/or discharge in which the seeds or the fertiliser are distributed and/or are guided into an unblocked outlet (5) adjacent to the blocking element (6).

8. A distributor head in accordance with one of the preceding claims, wherein the blocking element (6) has a wedge angle (13) with two side deflection flanks (7) in the range from 30° to 120°, preferably 45° to 90°, in particular around 50° to 80°.

9. A distributor head in accordance with one of the preceding claims, wherein a plurality of blocking elements (6) which are preferably symmetrically distributed are provided which each block at least one outlet (5).

10. A distributor head in accordance with the preceding claim, wherein each blocking element (6) blocks more than one outlet, preferably two outlets (5).

11. A distributor head in accordance with one of the preceding claims, wherein the ratio of blocked outlets to non-blocked outlets is at least 1:1, preferably 2:1.

12. A distributor head in accordance with one of the preceding claims, wherein the at least one blocking element (6) is made in the form of a removable insert.

13. A distributor head in accordance with one of the preceding claims, wherein a central end section of the at least one blocking element (6) is made free of air passages.

14. A distributor head in accordance with one of the preceding claims, wherein a central feed pipe (4) is provided which opens approximately centrally into a distributor chamber (3) of the distributor head, said distributor chamber formed in a distributor body (2), with the distributor body (2) being supported in a manner tiltable in all directions with respect to the feed pipe (4) and with an adjustment apparatus being provided for setting the angular position of the distributor body (2) with respect to the feed pipe (4).

15. A distributor head in accordance with the preceding claim, wherein the angular adjustment apparatus (16) has a multi-point support, preferably a three-point support, having length-adjustable support elements (14) which support the distributor body (2) at the feed pipe (4).

## Revendications

1. Tête de distributeur pour une machine agricole, notamment une machine à semence et/ou à engrais, en vue de la distribution pneumatique de semence, d'engrais ou similaires, avec une pluralité de sorties (5), qui conduisent en partant de la tête de distributeur vers des éléments d'évacuation de la machine agricole, ainsi qu'au moins un élément de blocage (6) en vue du blocage d'au moins une des sorties (5), l'élément de blocage (6) présentant au moins un passage d'air (11), qui permet la sortie d'air dans la sortie bloquée (5), mais empêche la sortie de semence ou d'engrais dans ladite sortie bloquée (5), **caractérisée en ce qu'**au moins un des éléments de blocage (6) est constitué de manière réglable par rapport à la taille de son passage d'air (11).

2. Tête de distributeur selon la revendication précédente, au moins un des éléments de blocage (6) présentant un flanc de dérivation latéral (7) avec au moins un interstice constituant le passage d'air (11), dont la largeur d'interstice est constituée de manière modifiable.

3. Tête de distributeur selon la revendication précédente, au moins un des flancs de dérivation latéraux (7) présentant deux sections de flanc (7a, 7b), qui sont disposées de manière chevauchante de sorte qu'entre elles un interstice est constitué, au moins une des sections de flanc (7a, 7b) étant montée sur paliers mobiles, et disposée de préférence de manière amovible.

4. Tête de distributeur selon une quelconque des revendications précédentes, au moins un des éléments de blocage (6) constituant un élément de clavette, qui présente au moins les deux sections de clavette mobiles l'une vers l'autre (9, 10).

5. Tête de distributeur selon la revendication précédente, au moins une des sections de clavette (9) constituant une pointe de clavette, qui chevauche avec ses flancs de dérivation latéraux (7a) les flancs de dérivation (7b) de l'autre section de clavette (10).

6. Tête de distributeur selon la revendication précédente, la pointe de clavette étant montée sur paliers amovibles dans différentes positions.

7. Tête de distributeur selon une quelconque des revendications précédentes, le passage d'air (11) présentant un sens de passage (15) contraire au sens de distribution et/ou de sortie dans lequel la semence ou l'engrais est distribué(e) et/ou guidé dans une sortie non bloquée (5) voisine de l'élément de blocage (6).

8. Tête de distributeur selon une quelconque des revendications précédentes, l'élément de blocage (6) avec deux flancs de dérivation latéraux (7) présentant un angle de clavette (13) dans la plage de 30° à 120°, de préférence de 45° à 90°, et notamment environ de 50° à 80°.

9. Tête de distributeur selon une quelconque des revendications précédentes, plusieurs éléments de blocage (6) répartis de préférence symétriquement étant prévus, qui bloquent au moins respectivement une sortie (5).

10. Tête de distributeur selon la revendication précédente, chaque élément de blocage (6) bloquant plus d'une, de préférence deux sorties (5).

11. Tête de distributeur selon une quelconque des revendications précédentes, le rapport des sorties bloquées aux sorties non bloquées étant au moins de 1:1, de préférence de 2:1.

12. Tête de distributeur selon une quelconque des revendications précédentes, au moins un des éléments de blocage (6) étant constitué en forme d'insert démontable.

13. Tête de distributeur selon une quelconque des revendications précédentes, une section frontale centrale d'au moins un élément de blocage (6) étant constituée sans passages d'air.

14. Tête de distributeur selon une quelconque des revendications précédentes, un tuyau d'alimentation central (4) étant prévu, qui débouche de manière approximativement centrée dans une chambre de distributeur (3) de la tête de distributeur, qui est constituée dans un corps de distributeur (2), le corps de distributeur (2) étant monté sur paliers basculables dans toutes les directions par rapport au tuyau d'alimentation (4) et un dispositif de réglage étant prévu pour le réglage de la position d'angle du corps de distributeur (2) par rapport au tuyau d'alimentation (4).

15. Tête de distributeur selon la revendication précédente, le dispositif de réglage d'angle (16) présentant un appui à plusieurs points, de préférence trois points avec des éléments d'appui à longueur modifiable (14), qui soutiennent le corps de distributeur (2) sur le tuyau d'alimentation (4).
